# EUROPÄISCHE PATENTANMELDUNG

(11) **EP 1 505 178 A2**
(43) Veröffentlichungstag der Anmeldung: **09.02.2005**
(21) Anmeldenummer: 04018085.3
(22) Anmeldetag: 30.07.2004
(51) Int. Cl.: C25D 5/54, C25D 7/00, A61C 13/00

(54) **Elektrisch leitfähiges Material**

(30) Priorität: 07.08.2003 DE 10337748
(71) Anmelder: Wieland Dental + Technik GmbH & Co. KG, 75179 Pforzheim (DE)
(72) Erfinder: Rübel, Susanne, 76307 Karlsbaf (DE)
(74) Vertreter: Patentanwälte Ruff, Wilhelm, Beier, Dauster & Partner

(57) **Zusammenfassung**

Die Erfindung betrifft ein elektrisch leitfähiges Material, insbesondere einen elektrischen Leitlack, für die vorzugsweise galvanische Herstellung dentaler Formteile. Dieses Material enthält mindestens eine die elektrische Leitfähigkeit bewirkende Komponente, und einen sogenannten dentalen Stumpflack oder dentalen Distanzlack oder die Bestandteile solcher Lacke. Vorzugsweise enthält das Material mindestens eine weitere Komponente, insbesondere mindestens einen Farbstoff, die beim Trocknen des elektrisch leitfähigen Materials eine Farbänderung oder einen Farbwechsel hervorruft.

## Beschreibung

Die Erfindung betrifft in erster Linie ein elektrisch leitfähiges Material für die vorzugsweise galvanische Herstellung dentaler Formteile. Insbesondere handelt es sich bei dem elektrisch leitfähigen Material um einen sogenannten Leitlack.

Im Dentalbereich werden prothetische Formteile heute standardmäßig mit Hilfe galvanischer Metallabscheidung hergestellt. Dabei kommen bei dem sogenannten Galvanoforming hauptsächlich Edelmetalle wie z. B. Gold und Goldlegierungen zum Einsatz. Für die bekannten zahnärztlichen und zahntechnischen Zwecke können die so hergestellten Formkörper/Formteile verwendet werden, insbesondere als sogenannte Dentalgerüste, auf die dann Keramik oder Kunststoff aufgebracht wird. Auch Formteile, die in der Doppelkronen- und Brückentechnik und als sogenannte Suprakonstruktionen u. dgl. eingesetzt werden, werden auf galvanischem Weg hergestellt.

Vor der galvanischen Abscheidung im Elektrolyten wird unabhängig vom Verwendungszweck der galvanisch hergestellten Formteile/Formkörper die zu galvanisierende Fläche mit einer Leitschicht aus einem elektrisch leitfähigen Material, häufig einem sogenannten Leitlack, versehen. Diese Leitpräparate sind lackartige Flüssigkeiten oder Pasten und enthalten vorzugsweise Edelmetalle (z. B. Silber) in feiner Pulver-/Flitterform als leitenden Bestandteil, sowie organische Binde- und Lösungsmittel verschiedener Art.

Das Aufbringen der Leitschicht kann auf verschiedene Art und Weise erfolgen, sie wird aber derzeit meist mit dem Pinsel, einem Faserstift (ähnlich Edding) oder durch Airbrush-Verfahren aufgebracht. Dabei dient sie auf nicht leitfähigen Trägermaterialien (z. B. Gips, Kunststoffe, Keramik) zur Herstellung der Leitfähigkeit der Oberfläche. Bei leitfähigen Trägermaterialien wie z. B. Metallen, Legierungen dient sie zusätzlich als leitfähige Zwischenschicht, die die Trennung der galvanisch aufgebrachten Schicht von dem Trägermaterial/Stumpfmaterial ermöglicht. In beiden Fällen verbleibt die Leitsilberschicht nach der Trennung der galvanischen Schicht vom Trägermaterial/Stumpfmaterial zum größten Teil an der galvanischen Schicht.

Wie bereits erwähnt, kommen bei der Herstellung dentaler Formteile, insbesondere bei der galvanischen Herstellung dentaler Formteile, die verschiedensten (elektrisch) nicht leitfähigen oder (elektrisch) leitfähigen Trägermaterialien zum Einsatz. In der Fachsprache werden diese Trägermaterialien auch als Stumpfmaterialien bezeichnet, da sie als vom Zahntechniker hergestelltes Positivmodell des vom Zahnarzt genommenen Abdrucks (Negativmodell) die präparierte Mundsituation, d. h. den Zahnstumpf bzw. die Zahnstümpfe, wiedergeben.

Ein auf dem Dentalgebiet verwendbares elektrisch leitfähiges Material, z. B. der Leitlack, muß dementsprechend auf alle genannten Trägermaterialien aufgebracht werden können und dort eine Leitschicht ausbilden. So ist das sehr häufig verwendete Trägermaterial Gips selbst nicht leitfähig, aber saugfähig. Dies bedeutet, daß der Leitlack teilweise in das poröse Gipsmaterial eingezogen wird und der restliche Teil des Leitlacks beim Trocknen verdunstet. Dadurch ist die Trocknungszeit des Leitlacks auf Gips erheblich kürzer als auf nicht saugfähigen Materialien. Zudem ist durch die poröse Oberfläche des Gipses mit einer gewissen Rauhigkeit die Haftung des Leitlacks begünstigt und damit beispielsweise besser als auf sehr glatten Trägermaterialien, wie beispielsweise Kunststoffmaterialien. Bei Kunststoffen als Trägermaterialien sind darüber hinaus aufgrund der geringen Saugfähigkeit die Trocknungszeiten gegenüber Gips als Trägermaterial vergleichsweise groß.
Keramik als Trägermaterial ist ebenfalls nicht leitfähig und besitzt im Normalfall eine extrem glatte Oberfläche mit geschlossener Porosität. Dies führt auch hier zu einer erschwerten Haftung des Leitlacks auf der Oberfläche und aufgrund der mangelnden Saugfähigkeit zu größeren Trocknungszeiten.
Auch Metalle als Trägermaterialien sind nicht saugfähig. Zudem wird ihre Oberfläche für die Verwendung als Trägermaterial in der Regel sorgfältig poliert. Dies führt dazu, daß bei Metallen als Trägermaterialien die Trocknungszeiten für den Leitlack am längsten und die Haftkräfte am niedrigsten sind. Dementsprechend stellen metallische Trägermaterialien, die hauptsächlich zur besseren Trennung einer galvanisch aufgebrachten Metallschicht (Sekundärteil) von dem metallischen Trägermaterial (Primärteil) mit einem Leitlack als Abstandhalter zur Spaltbildung versehen werden, die höchsten Anforderungen an einen auf dem Dentalgebiet verwendeten Leitlack.

Die unterschiedlichen Eigenschaften der auf dem Dentalgebiet verwendeten Trägermaterialien führen zu einer ganzen Reihe von Anforderungen an ein auf diesem Gebiet verwendbares elektrisch leitfähiges Material, wie einen sogenannten Leitlack. Die wichtigsten dieser Anforderungen sollen im folgenden kurz aufgezählt werden.
- Die Trocknungszeit des Leitlacks auf dem Trägermaterial sollte nicht mehr als einige Stunden, vorzugsweise weniger als eine Stunde, betragen. Dabei muß sich innerhalb dieser Zeiträume eine vollständig getrocknete Leitschicht ausbilden, und zwar über die gesamte Oberfläche des Trägermaterials. Nur dann ist eine gleichmäßige Leitfähigkeit und damit eine gleichmäßige Schichtdicke und Schichtqualität des galvanisch abgeschiedenen Metalls auf dem Trägermaterial gewährleistet.
- Die Haftung des Leitlacks auf dem Trägermaterial muß ausreichend sein, und zwar ebenfalls über die gesamte Oberfläche des Trägermaterials. Nur eine gute Haftung des Leitlacks auf dem Trägermaterial gewährleistet eine gute Passung des galvanisch abgeschiedenen Metalls auf dem Trägermaterial. Kommt es aufgrund einer verminderten oder schlechten Haftung des Leitlacks auf dem Trägermaterial zu Abhebungen der aufwachsenden galvanischen Metallschicht, so ist diese Passung nicht mehr gegeben. Eine Unterwanderung der Leitschicht durch den Elektrolyten für die galvanische Abscheidung muß verhindert werden.
- Der Leitlack muß über die gesamte ausgebildete Leitschicht eine gleichmäßig hohe (elektrische) Leitfähigkeit bereitstellen. Nur dann verteilt sich der Galvanostrom bei der Metallabscheidung gleichmäßig auf der in der Regel dreidimensionalen Oberfläche und stellt damit das Aufwachsen einer qualitativ einheitlichen Metallschicht mit einer an allen Stellen gleichen Schichtdicke sicher.
- Der Leitlack muß für den Anwender (in der Regel Zahnärzte und Zahntechniker sowie deren Personal) gut handhabbar sein. Dies betrifft zum einen die Konsistenz des Leitlacks, die einen einfachen Auftrag mit üblichen Methoden ermöglichen muß. Zum anderen sollte es für den Anwender in einfacher Weise möglich sein, die Dicke der aufgetragenen Leitschicht und deren Trocknungszustand zu beurteilen.
- Der Leitlack sollte sich nach der galvanischen Abscheidung zum einen problemlos vom Trägermaterial lösen und zum anderen rückstandsfrei von der galvanisch abgeschiedenen Metallschicht entfernen lassen. Eine zu starke Haftung des Leitlacks auf dem Trägermaterial würde dazu führen, daß der Leitlack, beispielsweise durch mechanische Bearbeitung, wieder vom Trägermaterial entfernt werden müßte. Rückstände aus dem Leitlack auf der Galvanoschicht würden als Verunreinigung zu Nachteilen bei der Weiterverwendung der abgeschiedenen Galvanoteile führen.

Bei all dem ist zu berücksichtigen, daß die galvanische Abscheidung und damit auch das Auftragen des Leitlacks von Anwendern ohne spezielles chemisch-technisches Fachwissen durchgeführt wird. Es handelt sich hier weder um Galvanotechniker noch um Lackiertechniker, sondern, wie erwähnt, um Zahnärzte, Zahntechniker und deren Personal. Die für den Galvanisierprozeß verwendeten handelsüblichen Geräte sind weitgehend automatisiert, so daß die dort vorgesehenen Verfahrensparameter vom Anwender gerade nicht individuell eingestellt werden sollen. Dementsprechend muß auch die Ausbildung der Leitschicht auf dem jeweiligen Trägermaterial möglichst einfach mit reproduzierbarem Ergebnis zu bewerkstelligen sein.

In Anbetracht der bisherigen Ausführungen stellt sich die Erfindung die Aufgabe, ein elektrisch leitfähiges Material, insbesondere einen Leitlack, für die vorzugsweise galvanische Herstellung dentaler Formteile zur Verfügung zu stellen, das den genannten Anforderungen weitestgehend Rechnung trägt. Insbesondere soll dieses elektrisch leitfähige Material für die verschiedensten Trägermaterialien geeignet sein und auf diesen Trägermaterialien, im Vergleich mit derzeit eingesetzten Leitmaterialien, möglichst verkürzte Trocknungszeiten sowie eine verbesserte Haftung und/oder Leitfähigkeit aufweisen. Dabei soll die Handhabung des leitfähigen Materials mindestens genauso gut sein wie bei den bisher eingesetzten leitfähigen Materialien. Außerdem soll es Aufgabe der Erfindung sein, dem Anwender einen Kontrollparameter zur Verfügung zu stellen, der es ihm ermöglicht, die Qualität der aufgebrachten Leitschicht möglichst während und nach dem Auftrag zu beurteilen.

Diese Aufgabe wird gelöst durch das elektrisch leitfähige Material, insbesondere den Leitlack mit den Merkmalen des Anspruchs 1. Bevorzugte Ausführungsformen dieses Materials sind in den abhängigen Ansprüchen 2 bis 17 dargestellt. Der Gegenstand der Erfindung umfaßt ebenfalls die Verwendung gemäß Anspruch 18 sowie den dentalen Stumpflack bzw. dentalen Distanzlack gemäß Anspruch 19 mit seinen Ausführungsformen der Ansprüche 20 bis 23. Der Wortlaut sämtlicher Ansprüche wird hiermit durch Bezugnahme zum Inhalt dieser Beschreibung gemacht.

Diese Aufgabe wird gelöst durch ein eingangs erwähntes elektrisch leitfähiges Material, insbesondere einen Leitlack, der mindestens eine die elektrische Leitfähigkeit bewirkende Komponente und einen sogenannten dentalen Stumpflack oder dentalen Distanzlack oder die Bestandteile eines solchen Stumpflacks oder Distanzlacks enthält. Es wurde nämlich überraschenderweise festgestellt, daß die Zugabe einer Komponente, die die elektrische Leitfähigkeit bewirkt, zu einem Stumpflack/Distanzlack oder zu den Komponenten solcher Lacke zu einem neuen Leitmaterial/Leitlack mit verbesserten Eigenschaften führt.

Die sogenannten Stumpflacke oder Distanzlacke sind den Fachleuten auf dem Dentalgebiet, insbesondere den Zahntechnikern, bekannt. Solche Lacke werden im Englischen auch als "die spacer" bezeichnet. Sie werden im wesentlichen bei zwei Hauptanwendungsgebieten eingesetzt. Zum einen werden Gips- oder Kunststoffstümpfe während der Herstellung des Zahnersatzes durch solche Lacke vor einer Abnutzung und daraus resultierenden Ungenauigkeiten geschützt. Im Falle von Gipsstümpfen können zusätzlich noch sogenannte Gipshärter in Form von Lacken zur Oberflächenversiegelung eingesetzt werden. Zum anderen wird durch das Auftragen von Stumpflacken oder Distanzlacken ein definierter Spalt (Funktion des Abstandhalters) für das Zementieren oder die adhäsive Befestigung des Zahnersatzes erzeugt. Die Dicke des Spalts (d. h. der durch den Abstandhalter erzeugte Abstand) wird durch die Zugabe von Füllstoffen in diesen Lacken gesteuert.

Das erfindungsgemäße leitfähige Material, das im folgenden (nicht einschränkend) der Einfachheit halber nur noch als Leitlack bezeichnet werden soll, kann auf verschiedene Weise aus seinen einzelnen Komponenten hergestellt und zusammengesetzt sein.

So ist es bei einer ersten bevorzugten Ausführungsform möglich, daß der Leitlack aus der die elektrische Leitfähigkeit bewirkenden Komponente und einem fertigen dentalen Stumpflack/Distanzlack hergestellt ist. Der Stumpflack/Distanzlack versteht sich dabei als gebrauchsfertiges Produkt, d. h. einschließlich Lösungsmittel. Die Lösungsmittelkomponente des Distanzlacks/Stumpflacks kann dabei den übrigen Lackkomponenten vollständig oder teilweise (beispielsweise in Form eines sogenannten Verdünners) unmittelbar vor oder während des Mischens mit der die elektrische Leitfähigkeit bewirkenden Komponente zugegeben werden. Diese Ausführungsformen können erfindungsgemäß insbesondere dadurch modifiziert werden, daß die die Leitfähigkeit bewirkende Komponente mit mindestens einem Lösungsmittel/Lösungsmittelgemisch/Verdünner und einem fertigen dentalen Stumpflack/Distanzlack vermischt wird.

Bei einer zweiten bevorzugten Ausführungsform des erfindungsgemäßen Leitlacks ist dieser aus einem derzeit handelsüblichen Leitlack (d. h. gemäß Stand der Technik), der die die elektrische Leitfähigkeit bewirkende Komponente bereits enthält, und einem fertigen dentalen Stumpflack/Distanzlack hergestellt. Diese Ausführungsform hat den Vorteil, daß zwei bereits fertige Produkte zur Herstellung des erfindungsgemäßen Leitlacks miteinander vermischt werden können. Gegebenenfalls können solche Ausführungsformen dadurch modifiziert werden, daß zu den beiden fertigen Lacken noch zusätzlich weiteres elektrisch leitfähiges Material oder weiteres Lösungsmittel hinzugegeben wird, um die Leitfähigkeit und Konsistenz des erfindungsgemäßen Produkts in gewünschter Weise einzustellen.

Bei einer dritten bevorzugten Ausführungsform ist der erfindungsgemäße Leitlack aus den (einzelnen) Bestandteilen eines handelsüblichen Leitlacks und den (einzelnen) Bestandteilen eines dentales Stumpflacks/ Distanzlacks hergestellt. Auf diese Weise kann die Zusammensetzung des erfindungsgemäßen Produkts in beliebiger Weise modifiziert werden.

Die Bestandteile der derzeit bekannten handelsüblichen Stumpflacke oder Distanzlacke bzw. der derzeit bekannten handelsüblichen Leitlacke sind dem Fachmann bekannt. Solche Lacke enthalten unter anderem Bindemittel (hauptsächlich in Funktion als Filmbildner), Pigmente, Füllstoffe, Lösungsmittel sowie (weitere) Zusatzstoffe und Hilfsstoffe, wie beispielsweise Fungizide, Lichtschutzmittel, Weichmacher, Trocknungsmittel und dergleichen. Als Bindemittel kommen dabei die unterschiedlichsten Stoffe zum Einsatz, wie beispielsweise Nitrocellulose, Epoxydharze, Alkydharze, Polyesterharze, Acrylharze und andere mehr. Auch die verwendeten Lösungsmittel/Verdünner sind dem Fachmann bekannt und umfassen in erster Linie organische Lösungsmittel, vorzugsweise polare organische Lösungsmittel, wie Alkohole, Ketone und andere mehr.

Bei einer besonders bevorzugten Ausführungsform der Erfindung enthält der neue Leitlack mindestens eine weitere Komponente, vorzugsweise mindestens einen Farbstoff, die beim Trocknen des Leitlacks eine Farbänderung oder einen Farbwechsel hervorruft. Solche Komponenten, beispielsweise Farbstoffe bzw. Pigmente, sind bereits bekannt. Sie werden bereits auch in dentalen Stumpflacken oder Distanzlacken eingesetzt, um dem Anwender einen Hinweis auf den Trocknungszustand dieses Lackes zu geben. Die Erfindung macht sich nun diese Erkenntnis bei den genannten bevorzugten Ausführungsformen zunutze, indem auch der erfindungsgemäße Leitlack eine solche Komponente enthält. Durch die Kombination der im erfindungsgemäßen Leitlack enthaltenen Komponenten, insbesondere durch die Kombination der "Kontrollkomponente" (Farbstoff mit Farbänderung/Farbwechsel) und "elektrisch leitfähige Komponente" lassen sich bei dem neuen Leitlack besondere Vorteile erzielen, die die Herstellung der galvanisch abgeschiedenen dentalen Formteile wesentlich erleichtert und verbessert.

Dies soll an dieser Stelle kurz grundsätzlich erläutert werden.

Wie später anhand der Beispiele noch gezeigt wird, kann ein erfindungsgemäßer Leitlack aus einem bekannten Stumpflack/Distanzlack mit Kontrollkomponente (bzw. aus dessen Bestandteilen) und Silber als elektrisch leitfähiger Komponente (bzw. aus einem entsprechenden Leitlack) hergestellt werden. Ein solcher erfindungsgemäßer Leitlack zeigt beispielsweise eine Farbe von silber-orange. Bringt man diesen Leitlack auf ein nicht saugfähiges Trägermaterial (siehe oben) auf, so erfolgt beim Trocknen des Leitlacks ein Farbumschlag/Farbwechsel von silber-orange nach silber-rosa, der für den Anwender deutlich zu erkennen ist. Dabei gibt dieser Farbwechsel nicht nur Aufschluß über den jeweiligen Trocknungszustand des Leitlacks, sondern auch über die Schichtdicke der mit Hilfe des Leitlacks aufgetragenen Leitschicht. Je dicker diese Leitschicht ist, desto intensiver erscheint dem Anwender die rosa Farbe. Durch die Farbe des Leitlacks entsteht zusätzlich ein deutlicher Farbkontrast zum verwendeten Trägermaterial, der es dem Anwender ermöglicht, Fehlstellen, d. h. in der Regel also nicht mit dem Leitlack beschichtete Stellen, deutlich zu erkennen und diese vor Beginn des Galvanisierprozesses auszubessern. Bislang waren solche Fehlstellen bei der Anwendung konventioneller Leitlacke durch die silberne Farbe dieser Leitlacke kaum ohne Mikroskop zu erkennen. Dies betraf insbesondere gerade die metallischen Stumpfmaterialien, die zumeist ja selbst ebenfalls silbergrau bis zart goldfarben sind.
Diese Darstellung zeigt also die Vorteile, die bei Verwendung solcher Kontrollkomponenten in dem erfindungsgemäßen Leitlack vorhanden sind.

Erfindungsgemäß kann der zur Herstellung des neuen Leitlacks verwendete Distanzlack/Stumpflack beliebig zusammengesetzt sein. Das heißt, daß auch weitgehend transparente Distanz- oder Stumpflacke oder im wesentlichen farblose Distanz- oder Stumpflacke im neuen Leitlack enthalten sein können. Gegebenenfalls kann dann die zuvor erwähnte "Kontrollkomponente" dem neuen Leitlack getrennt zugegeben werden. Erfindungsgemäß einsetzbare Distanz- oder Stumpflacke oder deren Komponenten bieten beispielsweise die Firma al dente dentalprodukte, Meckenbeuren, DE oder die Firma YETI Dentalprodukte, Engen, DE an.

Die Komponente, die die elektrische Leitfähigkeit bewirkt, liegt im erfindungsgemäßen Leitlack vorzugsweise in Form von Partikeln oder sogenannten Flakes vor. Diese Partikel bzw. Flakes sind dann im fertigen Leitlack als suspendierte Teilchen enthalten.

In Weiterbildung handelt es sich bei der Komponente, die die elektrische Leitfähigkeit im Leitlack bewirkt, vorzugsweise um mindestens ein Metall oder mindestens eine Metallegierung. Ein besonders zu erwähnendes Metall ist hierbei Kupfer. Darüber hinaus sind als besonders bevorzugte Metalle oder Metallegierungen die Edelmetalle oder die edelmetallhaltigen Legierungen zu nennen. Bei diesen bevorzugt verwendbaren Edelmetallen handelt es sich insbesondere um Silber oder um Gold.

Weiter bevorzugt sind Ausführungsformen, bei denen die Komponente, die die elektrische Leitfähigkeit bewirkt, im Material, bezogen auf dessen Gesamtmenge, in einer Menge von < 50 Gew.-%, vorzugsweise < 40 Gew.-% enthalten ist. Innerhalb der genannten Grenzen sind wiederum Materialien bzw. Leitlacke hervorzuheben, bei denen die Komponente, die die elektrische Leitfähigkeit bewirkt, im Material, bezogen auf dessen Gesamtmenge, in einer Menge zwischen 33 Gew.-% und 40 Gew.-%, vorzugsweise in einer Menge zwischen 35 Gew.-% und 38 Gew.-%, enthalten ist.

Die gemachten Mengenangaben in Bezug auf die die elektrische Leitfähigkeit bewirkende Komponente beziehen sich dabei insbesondere auch auf die als eine solche Komponente verwendeten Metalle, vorzugsweise Edelmetalle. Ganz allgemein und insbesondere bei diesen Ausführungen zeigt sich der Vorteil, daß der Gehalt an Metallpartikeln, beispielsweise Silberpartikeln, im Leitlack gegenüber den bisher bekannten handelsüblichen Leitlacken/Leitsilberlacken reduziert werden kann. So enthalten bisher bekannte Leitsilberlacke üblicherweise das Silber in Mengen zwischen ca. 40 Gew.-% und ca. 70 Gew.-%. Wie oben erläutert können diese Silbermengen bei den bevorzugten erfindungsgemäßen Ausführungsformen auf < 40 %, insbesondere auch deutlich darunter, reduziert werden. Dies bringt in Bezug auf die Wirtschaftlichkeit und auch in Bezug auf den Umweltschutz eine signifikante Verbesserung.

Erfindungsgemäß kann der gesamte Bindemittelgehalt im neuen Leitlack innerhalb breiter Grenzen variiert werden. Damit läßt sich beispielsweise die Konsistenz des neuen Leitlacks innerhalb entsprechend breiter Grenzen variieren. Vorzugsweise beträgt der Gehalt an insbesondere organischen Bindemittel im Material mehr als 5 Gew.-%.

Die Viskosität des im neuen Leitlack enthaltenen Stumpflacks oder Distanzlacks kann indirekt einen Einfluß auf die Konsistenz des erfindungsgemäßen Leitlacks haben. In diesem Zusammenhang ist es bevorzugt, wenn der im neuen Leitlack enthaltene Stumpflack oder Distanzlack eine Viskosität zwischen 20 und 50 MPa, vorzugsweise zwischen 30 und 40 MPa aufweist. Selbstverständlich kann die Viskosität des neuen Leitlacks aber auch durch die Mengen seiner übrigen Komponenten, beispielsweise durch den Bindemittelgehalt oder durch den Lösungsmittelgehalt variiert werden.

Die erfindungsgemäße Erkenntnis resultiert nicht nur in dem bisher dargestellten neuen elektrisch leitfähigen Material/Leitlack, sondern läßt sich auch auf andere Weise darstellen. So resultiert die Erfindung zum einen auch in der Verwendung eines dentalen Stumpflacks oder dentalen Distanzlacks oder der Bestandteile solcher Lacke zur Herstellung eines elektrisch leitfähigen Materials, insbesondere eines Leitlacks, für die vorzugsweise galvanische Herstellung dentaler Formteile. Trotz jahrzehntelanger Anwendung solcher Lacke in der Dentaltechnik war bisher noch niemand auf den Gedanken gekommen, solche Lacke erfindungsgemäß zu modifizieren und auf diese Weise einen neuen Leitlack mit verbesserten Eigenschaften bereitzustellen.

Dementsprechend läßt sich die Erfindung zum anderen auch so darstellen, daß sie einen dentalen Stumpflack oder dentalen Distanzlack umfaßt, der mindestens eine Komponente, die eine elektrische Leitfähigkeit hervorruft, enthält. Wie oben erläutert, liegt diese die elektrische Leitfähigkeit hervorrufende Komponente vorzugsweise in Form von Partikeln oder Flakes vor. Bei dieser Komponente handelt es sich vorzugsweise um ein Metall oder eine Metallegierung, wobei die Edelmetalle oder edelmetallhaltigen Legierungen hierbei hervorzuheben sind. Als Beispiele für diese Metalle sind Kupfer und insbesondere Silber oder Gold zu nennen.

Im folgenden sollen die Vorteile der Erfindung nochmals zusammengefaßt und erläutert werden.

Mit Hilfe der Erfindung läßt sich auf einfache Weise ein neuer Leitlack bereitstellen, der gegenüber den bisher bekannten, handelsüblichen Leitlacken deutlich verbesserte Eigenschaften aufweist. Wie aus den Beispielen noch hervorgehen wird, können mit dem erfindungsgemäßen Leitlack nicht nur die Eigenschaften der Haftung auf verschiedenen Trägermaterialien, der Leitfähigkeit und der Handhabbarkeit verbessert, sondern es kann auch die Trocknungszeit zum Teil deutlich verkürzt werden. Je nach Trägermaterial lassen sich hier Trocknungszeiten von < 15 min. oder sogar noch kürzer erreichen, was weit unterhalb der Trocknungszeiten bisher bekannter Leitlacke liegt. Damit ist der gesamte Galvanisierprozeß für den Anwender innerhalb kürzerer Zeiten durchführbar, was die Wirtschaftlichkeit dieses Verfahrens insgesamt für ihn deutlich erhöht.

Darüber hinaus ist der erfindungsgemäße Leitlack für alle bekannten Trägermaterialen/Stumpfmaterialien geeignet und führt bei allen diesen Materialien zu guten bis sehr guten Ergebnissen. Der erfindungsgemäße Leitlack ist damit universell anwendbar, was seine Einsatzmöglichkeit für den Anwender stark vereinfacht. Er muß nicht auf verschiedene Leitlacke für verschiedene Trägermaterialien zurückgreifen oder Besonderheiten bei Anwendung eines Leitlacks für verschiedene Trägermaterialien beachten. Im Rahmen der Wirtschaftlichkeitsbetrachtungen ist noch zu betonen, daß die die Leitfähigkeit bewirkende Komponente im erfindungsgemäßen Leitlack häufig in geringerer Menge vorhanden sein kann als dies bei den bisher bekannten Leitlacken der Fall ist.

In besonderer Weise zeigen sich die Vorteile der Erfindung bei Ausführungsformen, bei denen im Leitlack eine sogenannte Kontrollkomponente mit Farbwechsel/Farbänderung beim Trocknungsprozeß vorhanden ist. Wie bereits erläutert, wird dem Anwender dadurch zum einen angezeigt, wie dick die aufgebrachte Leitschicht ist und zum anderen, wie der Trocknungszustand ist. Ist die Ausgangsfarbe (wie beispielsweise silber-orange) noch vorhanden, so ist der Leitlack noch ausreichend feucht und damit verarbeitbar. Dementsprechend können beispielsweise dickere Lacktropfen noch verstrichen werden, ohne daß man wie bisher Gefahr läuft, die teilweise bereits getrocknete/abgebundene Leitschicht wieder zu verschieben oder zu zerstören.

Ein weiterer wichtiger Vorteil bei Anwesenheit der Kontrollkomponente im Leitlack ist, daß sich der Durchmischungsgrad der leitfähigen Teilchen, also beispielsweise der Silberpartikel/Silberflakes bei dem neuen Lack viel besser abschätzen läßt als dies bei den bisherigen Leitlacken der Fall war. Bei den bisherigen Leitlacken zeigen sämtliche Silberpartikel im farblosen Lack für das Auge auch bei schlechterer Durchmischung eine silberne Farbe. Bei den bevorzugten Ausführungsformen des neuen Leitlacks mit beispielsweise Farbe silber-orange ist die ausreichende Durchmischung optisch daran erkennbar, daß eine gleichmäßige Farbe silber-orange vorliegt. Bei schlechterer Durchmischung sind deutliche orangene Farbschlieren zwischen den Silberpartikeln zu erkennen.

Die geschilderten und weitere Merkmale der Erfindung ergeben sich aus der nachfolgenden Beschreibung der Beispiele in Verbindung mit den Unteransprüchen. Dabei können die einzelnen Merkmale jeweils für sich allein oder in Kombination miteinander verwirklicht sein.

### Beispiele

### Beispiel 1:

Es werden 5 g des erfindungsgemäßen Lackes folgendermaßen hergestellt:

| Bestandteil | g | Gew.-% |
|---|---|---|
| Silberflakes (99,5 % < 20 µm) | 1,80 | 36,0 |
| Verdünner: (Yeti Dental, DE; Verdünner für Stumpflacke; Art. 510-0001) | 0,69 | 13,80 |
| Verdünner (Wieland Dental + Technik, DE; Verdünner für Leitsilberlack; Art.-Nr.: 6629) | 0,66 | 13,20 |
| Stumpflack rot (Yeti Dental, DE; Art. 500-0001) | 1,85 | 37,0 |

Der hergestellte Leitsilberlack läßt sich sehr gut auftragen und ist für alle Indikationen einsetzbar. Die erforderliche Trockenzeit liegt bei 5 - 8 min. Auf Gips trocknet er mit gleichmäßig silberner Farbe. Auf nicht saugfähigen Stumpfmaterialien wechselt die Farbe von silber-orange beim Trocknen nach silber-rosa. Die Leitfähigkeit der entstandenen Schicht ist sehr gut, so daß beim Galvanisieren die entstehende Gold-Primärschicht sehr gleichmäßig zuwächst.

### Beispiel 2:

Es werden 5,71 g des erfindungsgemäßen Lackes folgendermaßen hergestellt:

| Bestandteil | g | Gew.-% |
|---|---|---|
| Silberflakes (99,5 % < 20 µm) | 2,07 | 36,25 |
| | | |
| Verdünner (Wieland Dental + Technik, DE; Verdünner für Leitsilberlack; Art.-Nr.: 6629) | 1,72 | 30,12 |
| Stumpflack rot (Yeti Dental; Art. 500-0001) | 1,92 | 33,63 |

Der hergestellte Leitsilberlack läßt sich sehr gut auftragen und ist für alle Indikationen einsetzbar. Die erforderliche Trockenzeit liegt bei 10 min. Auf Gips trocknet er mit gleichmäßig silberner Farbe. Auf nicht saugfähigen Stumpfmaterialien wechselt die Farbe von silber-orange beim Trocknen nach silber-rosa. Die Leitfähigkeit der entstandenen Schicht ist sehr gut, so daß beim Galvanisieren die entstehende Gold-Primärschicht sehr gleichmäßig zuwächst.

### Beispiel 3:

Es werden 4 g des erfindungsgemäßen Lackes folgendermaßen hergestellt:

| Bestandteil | g | Gew.-% |
|---|---|---|
| AGC® Leitsilberlack (Wieland Dental + Technik, DE; Art.-Nr: 6628) | 2,0 | 50,0 |
| Silberflakes (99,5 % < 20 µm) | 1,00 | 25,0 |
| | | |
| Stumpflack rot (Yeti Dental, DE; Art. 500-0001) | 1,00 | 25,0 |

Der hergestellte Leitsilberlack ist etwas dickflüssiger. Bei der Applikation fängt der Lack sehr schnell an abzubinden, so daß der Auftrag zügig mit dem Pinsel vorgenommen wird. Die erforderliche Trockenzeit liegt bei 13 min. Auf Gips trocknet er mit gleichmäßig silberner Farbe. Auf nicht saugfähigen Stumpfmaterialien wechselt die Farbe von silber-orange beim Trocknen nach leicht silber-rosa. Die Leitfähigkeit der entstandenen Schicht ist gut, so daß beim Galvanisieren die entstehende Gold-Primärschicht sehr gleichmäßig zuwächst.

### Beispiel 4:

Es werden 3 g des erfindungsgemäßen Lackes folgendermaßen hergestellt:

| Bestandteil | g | Gew.-% |
|---|---|---|
| AGC® Leitsilberlack (Wieland Dental + Technik, DE; Art.-Nr: 6628) | 1,5 | 50,0 |
| | | |
| | | |
| Stumpflack rot (Yeti Dental, DE; Art. 500-0001) | 1,50 | 50,0 |

Der hergestellte Leitsilberlack läßt sich sehr gut auftragen. Die erforderliche Trockenzeit liegt bei 12 min. Auf Gips trocknet er mit einem Farbwechsel von silber-orange nach silber-pink Farbe. Auf nicht saugfähigen Stumpfmaterialien wechselt die Farbe von silber-orange beim Trocknen nach stark silber-pink. Die Leitfähigkeit der entstandenen Schicht ist gut, so daß beim Galvanisieren die entstehende Gold-Primärschicht sehr gleichmäßig zuwächst. Durch den intensiven Farbwechsel bei der Trocknung ist die Beurteilung des Zustandes der Leitsilberschicht für den Anwender hier besonders einfach!

Im folgenden sollen die Vorteile des erfindungsgemäßen Leitsilberlackes gemäß Beispiel 4 gegenüber einem handelsüblichen Leitlack hinsichtlich der beschriebenen Kriterien und Einflußgrößen durch einen Vergleich näher dargelegt werden.

AGC ® Leitsilberlack Wieland Dental + Technik, DE, Art. Nr. 6628
Applikation: Pinsel

| **Stumpfmaterial** | **Trockenzeit** | **Haftung** | **Leitfähigkeit** | Handling |
|---|---|---|---|---|
| **Gips** | 15 min | sehr gut | gut | sehr gut |
| **Kunststoff** | 45 min | befriedigend | befriedigend | befriedigend sorgfältiger Auftrag notwendig; |
| **Keramik** | 60 min | befriedigend | befriedigend | ausreichend Sehr sorgfältiger Auftrag notwendig; |
| **Primärteil einer Edel- metall-Dop- pelkrone** | 60 min | befriedigend | befriedigend | ausreichend sorgfältiger Auftrag notwendig; |
| **Titan- Pfosten** | 60 min | befriedigendausreichend | befriedigendausreichend | befriedigend sorgfältiger Auftrag notwendig; |
| **Primärteil einer Nicht- edelmetall- Doppelkrone** | 60 min Minimum | mangelhaft; Strömungsmuster; Faltenbildung; Unterwanderung | mangelhaft starke Potentialunterschiede, Fehlstellen | befriedigend sorgfältiger Auftrag notwendig; |

Erfindungsgemäßer Leitsilberlack gemäß Beispiel 1
Applikation: Pinsel

| **Stumpfmate rial** | **Trockenzeit** | **Haftung** | **Leitfähigkeit** | **Handling** |
|---|---|---|---|---|
| **Gips** | 10 min | sehr gut | sehr gut | sehr gut; rosa zeigt doppelt gestrichenes |
| **Kunststoff** | 15 min-60 min | gut | sehr gut | gut sorgfältiger Auftrag, rosa zeigt getrocknet |
| **Keramik** | 15 min | sehr gut | sehr gut | gut sorgfältiger Auftrag, rosa zeigt getrocknet |
| **Primärteil einer Edel- metall-Dop- pelkrone** | 20 min | sehr gut | sehr gut | gut sorgfältiger Auftrag, rosa zeigt getrocknet |
| **Titan-Pfosten** | 20 min | sehr gut | sehr gut | gut sorgfältiger Auftrag, rosa zeigt getrocknet |
| **Primärteil einer Nicht- edelmetall- Doppelkrone** | 30 min | gut; leichte, stellenw. Unterwanderung | sehr gut | gut sorgfältiger Auftrag, rosa zeigt getrocknet |

## Patentansprüche

1. Elektrisch leitfähiges Material, insbesondere Leitlack, für die vorzugsweise galvanische Herstellung dentaler Formteile, mindestens enthaltend
- eine die elektrische Leitfähigkeit bewirkende Komponente, und
- einen sogenannten dentalen Stumpflack oder Distanzlack oder die Bestandteile eines solchen Stumpflacks oder Distanzlacks.

2. Elektrisch leitfähiges Material nach Anspruch 1, **dadurch gekennzeichnet, daß** es aus der die elektrische Leitfähigkeit bewirkenden Komponente und einem fertigen dentalen Stumpflack oder Distanzlack hergestellt ist.

3. Elektrisch leitfähiges Material nach Anspruch 1 oder Anspruch 2, **dadurch gekennzeichnet, daß** es aus einem handelsüblichen Leitlack, der die die elektrische Leitfähigkeit bewirkende Komponente enthält, und einem fertigen dentalen Stumpflack oder Distanzlack hergestellt ist.

4. Elektrisch leitfähiges Material nach Anspruch 1, **dadurch gekennzeichnet, daß** es aus den Bestandteilen eines handelsüblichen Leitlacks und den Bestandteilen eines dentalen Stumpflacks oder Distanzlacks hergestellt ist.

5. Elektrisch leitfähiges Material nach einem der vorhergehenden Ansprüche, **dadurch gekennzeichnet, daß** es mindestens eine weitere Komponente, insbesondere mindestens einen Farbstoff, enthält, die beim Trocknen des elektrisch leitfähigen Materials eine Farbänderung oder einen Farbwechsel hervorrufen.

6. Elektrisch leitfähiges Material nach einem der vorhergehenden Ansprüche, **dadurch gekennzeichnet, daß** es einen weitgehend transparenten Distanzlack oder Stumpflack enthält.

7. Elektrisch leitfähiges Material nach einem der vorhergehenden Ansprüche, **dadurch gekennzeichnet, daß** es einen im wesentlichen farblosen Distanzlack oder Stumpflack enthält.

8. Elektrisch leitfähiges Material nach einem der vorhergehenden Ansprüche, **dadurch gekennzeichnet, daß** die die elektrische Leitfähigkeit bewirkende Komponente in Form von Partikeln oder Flakes vorliegt.

9. Elektrisch leitfähiges Material nach einem der vorhergehenden Ansprüche, **dadurch gekennzeichnet, daß** es sich bei der die elektrische Leitfähigkeit bewirkenden Komponente um mindestens ein Metall oder mindestens eine Metallegierung handelt.

10. Elektrisch leitfähiges Material nach Anspruch 9, **dadurch gekennzeichnet, daß** es sich bei dem Metall um Kupfer handelt.

11. Elektrisch leitfähiges Material nach Anspruch 9, **dadurch gekennzeichnet, daß** es sich bei dem Metall oder der Metallegierung um ein Edelmetall oder eine edelmetallhaltige Legierung handelt.

12. Elektrisch leitfähiges Material nach Anspruch 11, **dadurch gekennzeichnet, daß** es sich bei dem Edelmetall um Silber handelt.

13. Elektrisch leitfähiges Material nach Anspruch 11, **dadurch gekennzeichnet, daß** es sich bei dem Edelmetall um Gold handelt.

14. Elektrisch leitfähiges Material nach einem der vorhergehenden Ansprüche, **dadurch gekennzeichnet, daß** die die elektrische Leitfähigkeit bewirkende Komponente im Material, bezogen auf dessen Gesamtmenge, in einer Menge von < 50 Gew.-%, vorzugsweise < 40 Gew.-%, enthalten ist.

15. Elektrisch leitfähiges Material nach Anspruch 14, **dadurch gekennzeichnet, daß** die die elektrische Leitfähigkeit bewirkende Komponente im Material, bezogen auf dessen Gesamtmenge, in einer Menge zwischen 33 Gew.-% und 40 Gew.-%, vorzugsweise in einer Menge zwischen 35 Gew.-% und 38 Gew.-%, enthalten ist.

16. Elektrisch leitfähiges Material nach einem der vorhergehenden Ansprüche, **dadurch gekennzeichnet, daß** der Gehalt an vorzugsweise organischem Bindemittel im Material mehr als 5 Gew.-% beträgt.

17. Elektrisch leitfähiges Material nach einem der vorhergehenden Ansprüche, **dadurch gekennzeichnet, daß** der im Material enthaltene Stumpflack oder Distanzlack eine Viskosität zwischen 20 und 50 MPa, vorzugsweise zwischen 30 und 40 MPa, aufweist.

18. Verwendung eines sogenannten dentalen Stumpflacks oder Distanzlacks oder der Bestandteile eines solchen Stumpflacks oder Distanzlacks zur Herstellung eines elektrisch leitfähigen Materials, insbesondere eines Leitlacks, für die vorzugsweise galvanische Herstellung dentaler Formteile.

19. Dentaler Stumpflack oder dentaler Distanzlack, **dadurch gekennzeichnet, daß** er mindestens eine Komponente, die eine elektrische Leitfähigkeit bewirkt, enthält.

20. Stumpflack oder Distanzlack nach Anspruch 19, **dadurch gekennzeichnet, daß** die die elektrische Leitfähigkeit bewirkende Komponente in Form von Partikeln oder Flakes vorliegt.

21. Stumpflack oder Distanzlack nach Anspruch 19 oder Anspruch 20, **dadurch gekennzeichnet, daß** es sich bei der die elektrische Leitfähigkeit bewirkenden Komponente um ein Metall, vorzugsweise um ein Edelmetall, oder eine Metallegierung, vorzugsweise eine edelmetallhaltige Legierung, handelt.

22. Stumpflack oder Distanzlack nach Anspruch 21, **dadurch gekennzeichnet, daß** es sich bei dem Metall um Kupfer handelt.

23. Stumpflack oder Distanzlack nach Anspruch 21, **dadurch gekennzeichnet, daß** es sich bei dem Edelmetall um Silber oder Gold handelt.
